# EUROPEAN PATENT SPECIFICATION

(11) **EP 2 050 665 B1**
(45) Date of publication and mention of the grant of the patent: **15.12.2010**
(21) Application number: 08017826.2
(22) Date of filing: 10.10.2008
(51) Int. Cl.: B62J 6/02

(54) **Straddle-type vehicle**
Grätschsitz-Fahrzeug
Véhicule de type monté à califourchon

(30) Priority: 10.10.2007 JP 2007264946
(43) Date of publication of application: 22.04.2009
(73) Proprietor: Yamaha Hatsudoki Kabushiki Kaisha, Iwata-shi, Shizuoka 438-8501 (JP)
(72) Inventor: Hasegawa, Michiharu, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 612 129
- GB-A- 647 670
- JP-A- 3 082 685
- JP-A- 2007 035 499

## Description

The present invention relates to a straddle-type vehicle according to the preamble part of claim 1. In particular, the present invention relates to a straddle-type vehicle, such as a motorcycle, etc., comprising a front fork supported at a front end of a body frame to be able to turn, and a headlight device mounted to the front fork.

It is general in motorcycles to mount a headlight device to a front fork. In a conventional mount construction of a headlight device, a downwardly directed projection is provided at an upper end of, for example, a headlight housing, a forwardly projecting stay is provided on an upper bracket, which joins left and right fork bodies, and the projection is inserted into a through-hole of the stay to clamp a protrusive edge at a lower end of the headlight housing to an underbracket, as disclosed in JP-UM-A-58-184346.

With the conventional mount construction of a headlight device, however, the projection is formed on the headlight housing, the stay is provided on the upper bracket, and the projection is inserted into the through-hole of the stay, thus causing a problem that the headlight device does not have a sufficient mount stiffness and the headlight device is made liable to vibrate due to vibrations of a vehicle body. The invention has been thought of in view of the conventional situation.

JP 03082685 discloses a straddle-type vehicle which is readable on the preamble part of claim 1.

It is an objective of the present invention to provide a straddle-type vehicle capable of improving a headlight device in mount stiffness.

According to the present invention, said objective is solved by the features of claim 1.

Preferably, the upper bracket connects the left fork body and the right fork body above the headlight device, and/or the lower bracket connects the left fork body and the right fork body below the headlight device.

Further, preferably the first cover portion, the second cover portion, the first stay portion, and the second stay portion, respectively, are formed as separate parts.

Further, preferably the first cover portion and the second cover portion are extended so as to cover a lower portion of the light body.

Preferably, extended ends of the first cover portion and the second cover portion are opposed to each other centrally in vehicle width direction.

Preferably, the first cover portion and/or the second cover portion comprise a cast molding as a separate part.

Preferably, the first cover portion and the second cover portion have different rapping directions respectively.

Further, preferably the first stay portion and/or the second stay portion comprise a cast molding as a separate part.

Preferably, the first stay portion and the second stay portion have different rapping directions respectively.

Still further, preferably a speedometer unit is mounted to the first stay portion.

According to a preferred embodiment, a first front direction indictor is arranged on one side in vehicle width direction and a second front direction indictor is arranged on the other side in vehicle width direction.

Preferably, the first front direction indictor is mounted to the left fork body and the second front direction indictor is mounted to the right fork body.

Preferably, a plurality of bolts inserted in vehicle moving direction from the front fixes the first stay portion to the upper bracket and/or fixes the second stay portion to the lower bracket.

Further, preferably a steering handle is mounted to the upper bracket through a hand holder.

Preferably, the holding member covers at least a part of the hand holder.

In the following, the present invention is explained in greater detail by means of embodiments thereof in conjunction with the accompanying drawings, wherein:
- Fig. 1: is a left side view showing a motorcycle according to an embodiment;
- Fig. 2: is a front view showing a state, in which a headlight device of the motorcycle is mounted;
- Fig. 3: is a left side view showing a state, in which the headlight device is mounted;
- Fig. 4: is a left side view showing a cross section (cross section taken along the line IV-IV in Fig. 2) of the headlight device;
- Fig. 5: is a view (view seen in an arrow V in Fig. 2) showing the headlight device as viewed from forward and obliquely upward;
- Fig. 6: is a cross sectional view (cross sectional view taken along the line V-V in Fig. 5) showing a mount of an upper stay portion of the headlight device;
- Fig. 7: is a cross sectional view (cross sectional view taken along the line VII-VII in Fig. 3) showing the mount of the upper stay portion of the headlight device;
- Fig. 8: is a cross sectional view (cross sectional view taken along the line VIII-VIII in Fig. 3) showing a mount of a lower stay portion of the headlight device;
- Fig. 9: is a cross sectional view (cross sectional view taken along the line IX-IX in Fig. 3) showing a mount of a meter unit of the headlight device; and
- Fig. 10: is a view (view seen in an arrow X in Fig. 3) showing a flasher mount of the motorcycle.

Among others, the following reference signs are used in the figures:
2: body frame
3: front fork
4: front wheel
6: headlight device
7: steering handle
26a: left fork body
26b: right fork body
27a: upper bracket (first stay portion)
27b: lower bracket (second stay portion)
31: hand holder
32: main bulb
33: light housing
33c: left and right side walls of light housing
33d: lower portion of light housing
35: light body
36: light cover (holding member)
37a: left cover portion (first cover portion)
37b: right cover portion (second cover portion)
37d: extended ends of left and right cover portions
38: upper stay portion (first stay portion)
38c: left and right sides of upper stay portion
39: lower stay portion (second stay portion)
39b: left and right side portions of lower stay portion
40: speedometer unit
41 c, 41 d: bolts for fixation of upper and lower stay portions
42c, 42d: damper (elastic member)
44: flasher unit (front indicator)
c: center in vehicle width direction

An embodiment will be described below with reference to the accompanying drawings.

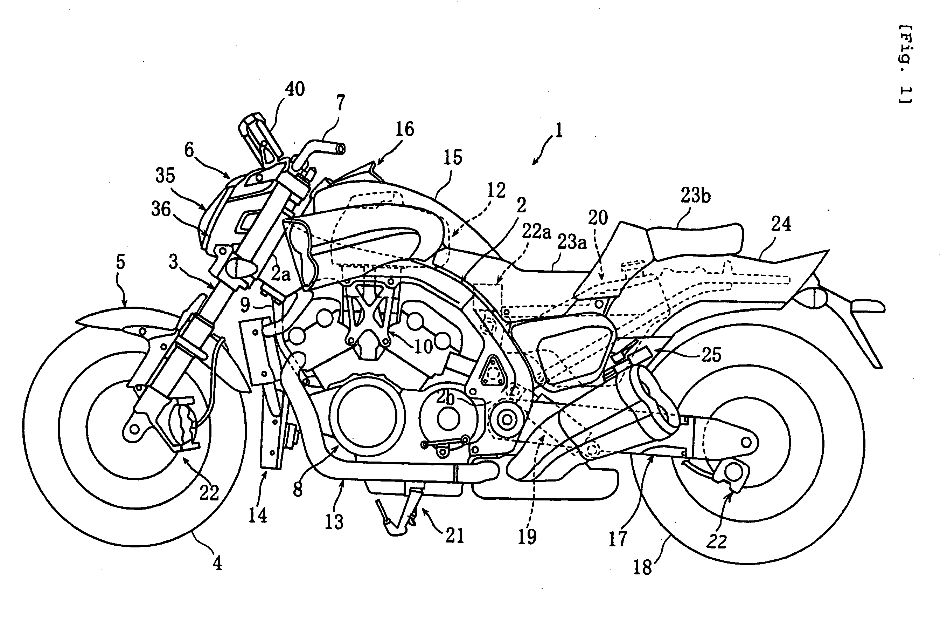

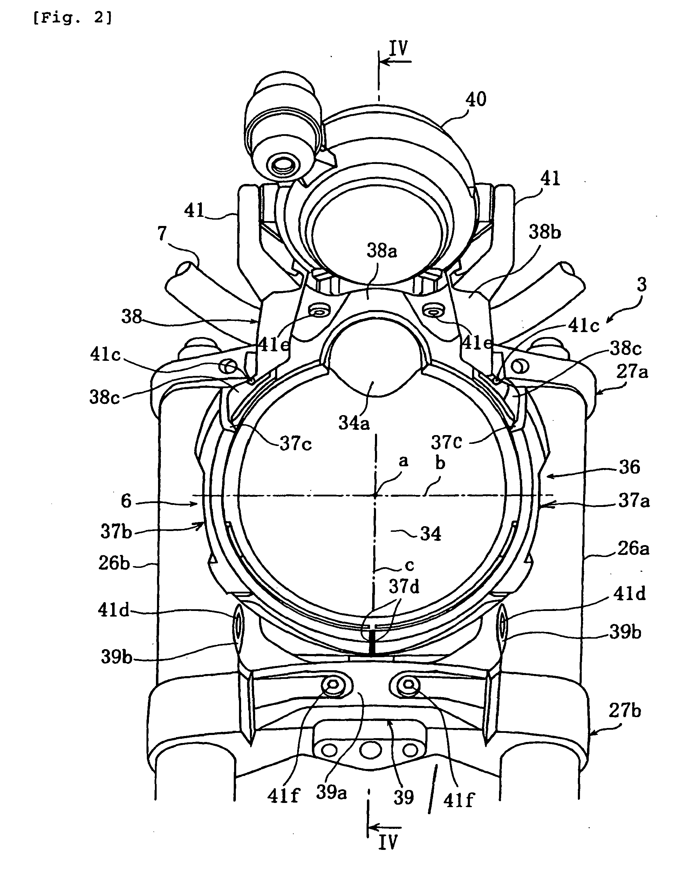

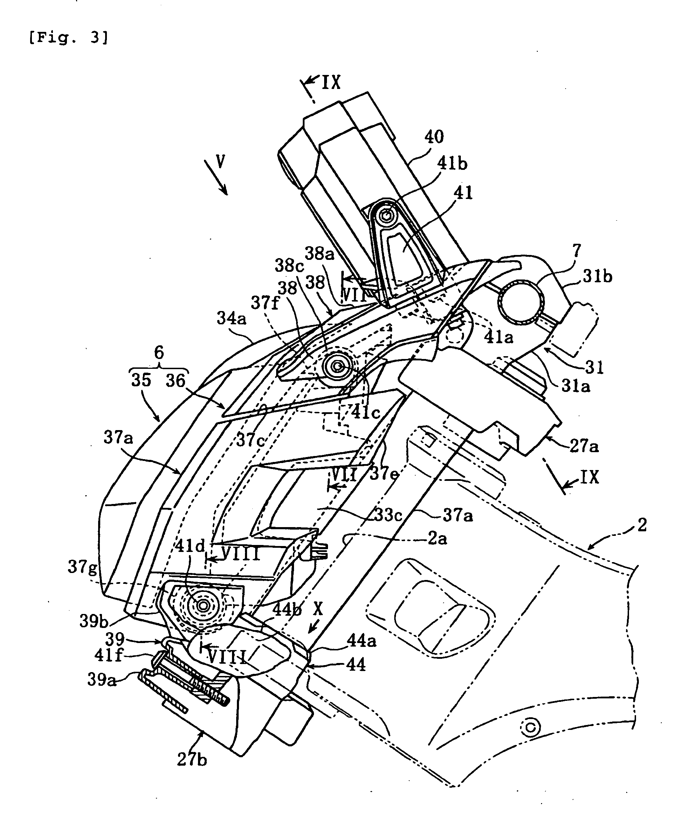

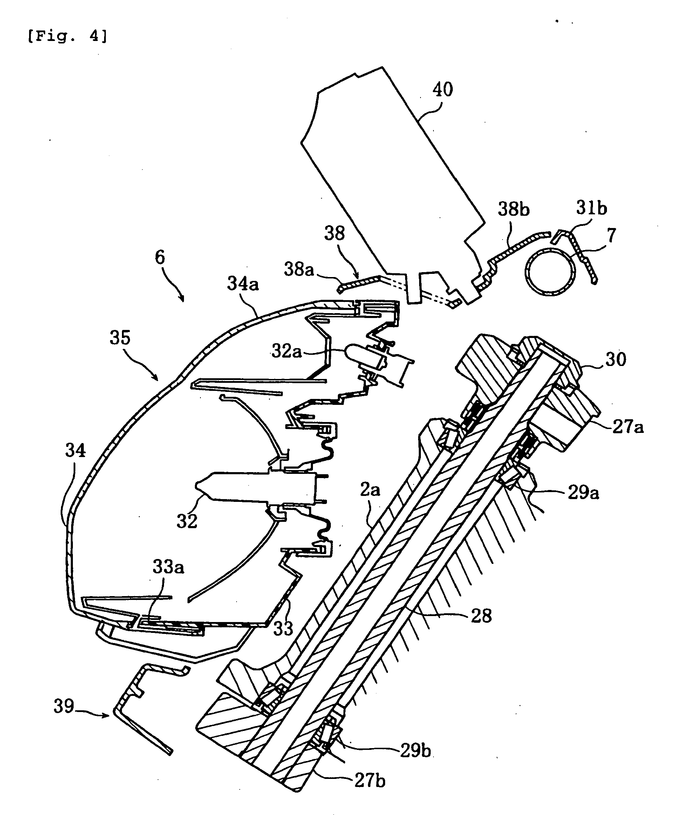

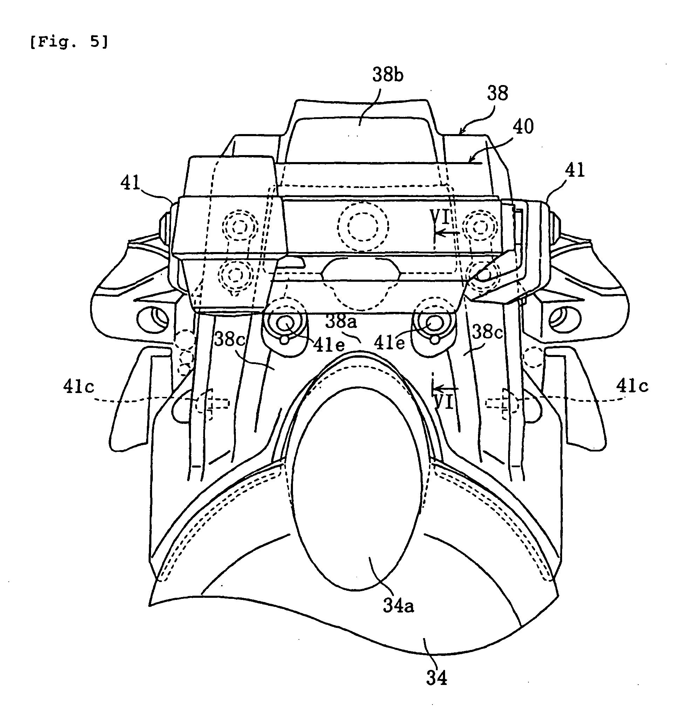

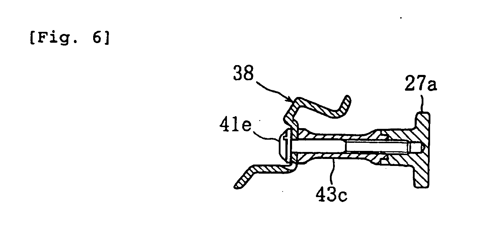

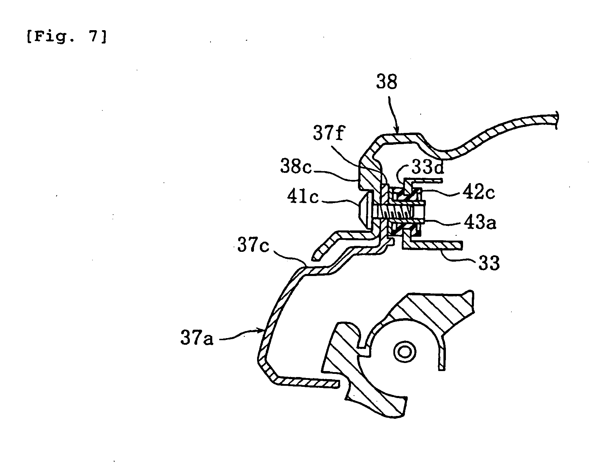

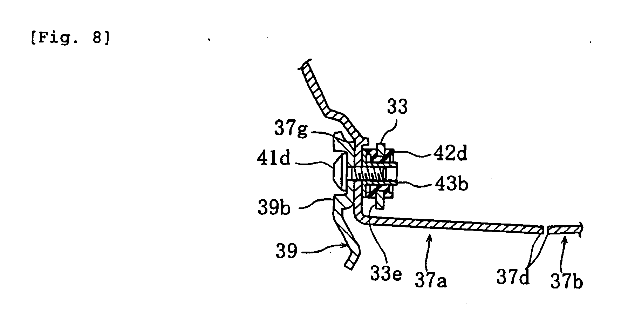

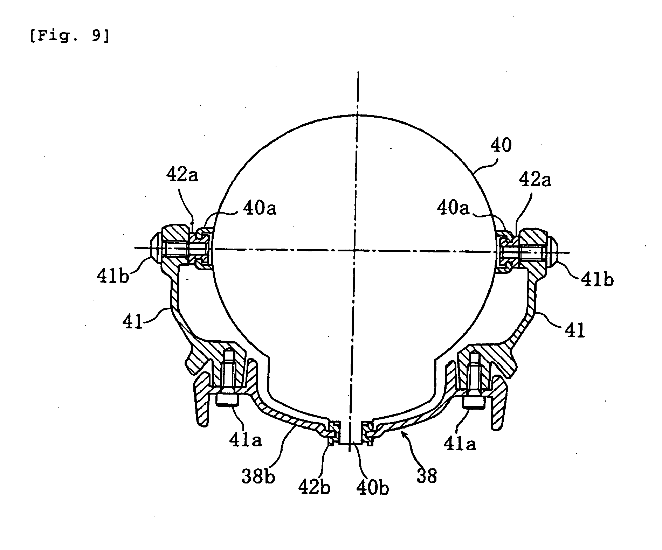

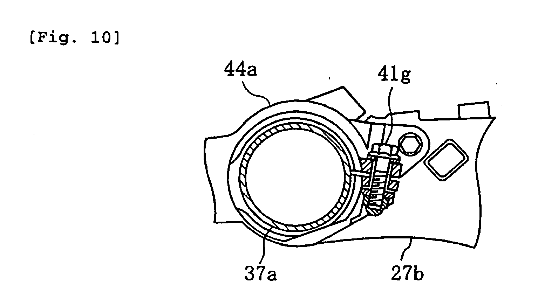

Figs. 1 to 10 are views illustrating a straddle-type vehicle (motorcycle) according to an embodiment. In general, a straddle-type vehicle has a body frame and a seat on which a rider can be seated straddling the body frame when being seated. In addition, front and rear, and left and right referred to in descriptions of the embodiment mean front and rear, and left and right as seen in a state of being seated on a seat unless otherwise specified.

In the drawings, the reference numeral 1 denotes a motorcycle, the motorcycle 1 having the following outline construction. A head pipe 2a at a front end of a body frame 2 supports a front fork 3 to make the same steerable left and right. A front wheel 4 is journaled at a lower end of the front fork 3, the front wheel 4 being covered by a front fender 5, the front fender 5 being mounted to a lower portion of the front fork 3. Also, the front fork 3 arranges a headlight device 6 on an upper portion thereof and fixes a steering handle 7 at an upper end thereof.

Also, an engine unit 8 is suspended from and supported on the body frame 2 by a front suspension bracket 9, a central suspension bracket 10, and a rear arm bracket portion 2b of the body frame 2. An intake device 12 and an exhaust device 13 are connected to the engine unit 8 and a radiator device 14 is arranged forwardly of the engine unit. The intake device 12 is covered from above by a frame cover 15 and an indication device 16 indicative of a vehicle state is arranged on the frame cover 15.

Also, a side stand 21 is arranged on a left wall lower portion of the engine unit 8 to have the motorcycle 1 uprising in a state of being a little inclined leftward.

Furthermore, the rear arm bracket portion 2b of the body frame 2 supports a rear arm 17 to enable the same to swing vertically and a rear wheel 18 is supported at a rear end of the rear arm 17. The rear wheel 18 and the front wheel 4 are braked by a hydraulic brake device 22.

A rear suspension 19 is arranged between the rear arm 17 and the rear arm bracket portion 2b, the rear suspension 19 includes a remote type operating characteristics adjustment mechanism 25.

A fuel tank 20 is arranged above the rear suspension 19. A hydraulic control unit 22a of the brake device 22 is arranged forwardly and obliquely upwardly of the fuel tank 20. A main seat 23a is arranged to cover upper portions of the hydraulic control unit 22a and the fuel tank 20 and a tandem seat 23b is arranged contiguous to the main seat 23a. In addition, the reference numeral 23c denotes a backrest that supports a rider's waist. Further, arranged below the tandem seat 23b is a rear fender 24 that covers the rear wheel 18 from above.

The front fork 3 includes a left fork body 26a and a right fork body 26b, which are arranged in a rearwardly inclined state, in which the fork bodies are positioned rearward as they go upward, an upper bracket 27a connecting between upper ends of the left and right fork bodies 26a, 26b, and a lower bracket 27b connecting between neighbors of lower edges of a light body 35 described later.

A cylindrical-shaped steering shaft 28 is fixed to a central portion of the lower bracket 27b in a vehicle width direction, the steering shaft 28 being inserted into the head pipe 2a and journaled by upper and lower bearings 29a, 29b. An upper end of the steering shaft 28 projects upward from the upper bracket 27a and is clamped and fixed to the upper bracket 27a by a steering nut 30. In this manner, the front fork 3 is supported at the front end of the body frame 2 to be made steerable left and right.

A hand holder 31 is arranged on an upper surface of the upper bracket 27a. The hand holder 31 comprises a pair of left and right base portions 31 a, 31 a bolted and fixed to the upper bracket 27a and a push portion 31 b arranged to bridge the both base portions. The steering handle 7 is arranged on the base portions 31 a, 31 a and fixed to the upper bracket 27a by bolting and fixing the push portion 31b to the base portions 31a.

Also, the headlight device 6 includes a light body 35 receiving a main bulb 32 being a light source in a bowl-shaped light housing 33, a light body 35 having an opening 33a of the light housing 33 closed by a lens 34, and a light cover (holding member) 36 covering the light body 35 decoratively and held by the front fork 3.

The light housing 33 and the lens 34 of the light body 35 are inclined rearward substantially along the front fork 3 as viewed from laterally of a vehicle and shaped circular as viewed from the front of a vehicle. Also, an auxiliary lens portion 34a is formed centrally of an upper edge of the lens 34 to bulge forward and an auxiliary bulb 32a is arranged inside the auxiliary lens portion 34a.

The light cover 36 is mounted directly to the upper bracket 27a and the lower bracket 27b. It is also possible that the light cover is solely mounted directly to the upper bracket (27a) or solely mounted directly to the lower bracket (27b). More specifically, the light cover 36 includes a first cover portion (left cover portion) 37a covering the light housing 33 from one side (left side) in the vehicle width direction, a second cover portion (right cover portion) 37b covering the light housing from the other side, a first stay portion (upper stay portion) 38, by which the light housing 33 is mounted to the upper bracket 27a, and a second stay portion (lower stay portion) 39, by which the light housing is mounted to the lower bracket 27b.

The left and right cover portions 37a, 37b and the upper and lower stay portions 38, 39, respectively, are formed as separate parts and molded by means of, for example, die casting of an aluminum alloy. Because of being separate parts in this manner, it is possible to adopt different rapping directions, thus enabling heightening freedom in shape and hence freedom in design without making a die structure complex. Also, decorative working such as coating or surface polishing, etc. for improvement in outward appearance is applied to outer surfaces of these parts. In addition, all of, or a plurality of the left and right cover portions 37a, 37b and the upper and lower stay portions 38, 39 can be cast integrally but such integral casting makes a die structure complex, so that these parts are made separate according to the embodiment.

The left and right cover portions 37a, 37b are made arcuate as viewed from the front of a vehicle, upper edges 37c thereof are positioned a little above a horizontal line b passing through the circular light housing 33 and a center point a of the lens 34, and lower edges 37d are opposed to each other on a vertical line c passing through the center point a. Also, the left and right cover portions 37a, 37b are substantially parallelogram-shaped as viewed from laterally of a vehicle and rear edges 37e thereof cover front edges of the left and right fork bodies 26a, 26b from the front of a vehicle.

The upper stay portion 38 is formed contiguous to the upper edges 37c of the left and right cover portions 37a, 37b and arcuate to surround an upper portion of the circular lens 34. Also, a bulged portion 38a surrounding the auxiliary lens portion 34a is formed centrally of the upper stay portion 38 in the vehicle width direction and a meter holding portion 38b contiguous to the bulged portion 38a is formed to extend rearward and obliquely upward. The meter holding portion 38b covers the hand holder 31 fixed to the upper bracket 27a and that portion of the steering handle 7, which is fixed by the hand holder 31.

A speedometer unit 40 is mounted to the meter holding portion 38b. More specifically, a pair of left and right support brackets 41, 41 are clamped and fixed to the meter holding portion 38b by bolts 41 a. The speedometer unit 40 is arranged between tip ends of the support brackets 41 and latches 40a formed on a peripheral edge of the speedometer unit 40 are fixed by bolts 41 b with dampers 42a therebetween. Also, a projection 40b formed at a rear edge of the speedometer unit 40 is latched on a damper 42b fitted into and mounted to the meter holding portion 38b.

Also, the lower stay portion 39 includes base portions 39a formed to cover lower edge portions of the left and right cover portions 37a, 37b from under and to cover a portion of the lower bracket 27b between the left and right fork bodies 26a, 26b from the front, and side portions 39b provided protrusively to extend upward from the base portion 39a.

Left and right sides 38c, 38c of the upper stay portion 38, flange portions 37f, 37f formed to project upward from the upper edges 37c of the left and right cover portions 37a, 37b, and the light housing 33 of the light body 35 are clamped together to thereby be fixed to one another. Also, the left and right side portions 39b, 39b of the lower stay portion 39, left and right, lower edges 37g of the left and right cover portions 37a, 37b, and the light housing 33 are clamped together to thereby be fixed to one another.

More specifically, dampers 42c, 42d, respectively, are fitted into and mounted to upper portions 33d and lower portions 33e of left and right side walls 33c of the light housing 33, flanged collars 43a, 43b having female threads are inserted into the dampers 42c, 42d from outside, and bolts 41 c, 41 d are threaded into the collars from outside. Thereby, the upper stay portion 38, the lower stay portion 39, and the left and right cover portions 37a, 37b are fixed to one another and the light housing 33 is elastically supported through the dampers 42c, 42d.

Two central portions of the upper stay portion 38 with the bulged portion 38a therebetween are clamped and fixed to the upper bracket 27a with spacers 43c therebetween by two bolts 41 e, 41 e inserted from the front of a vehicle. Also, two central portions on the base portion 39a of the lower stay portion 39 are clamped and fixed to the lower bracket 27b by two bolts 41f, 41f inserted from the front.

Also, left and right flasher units (first and second, front indicators) 44, 44 are mounted to the left and right fork bodies 26a, 26b to adjoin an upper edge of the lower bracket 27b. The left and right flasher units 44 are constructed such that slit type flasher stays 44a are clamped and fixed to the left and right fork bodies 26a, 26b by bolts 41 g and flasher lights 44b are mounted to tip ends of the flasher stays 44a projecting outward in the vehicle width direction.

As described above, according to the embodiment, since the light cover (holding member) 36 of the headlight device 6 is mounted directly to the upper bracket 27a and the lower bracket 27b, that is, is mounted without a stay, etc., which is a separate part, therebetween, it is possible to improve that stiffness, with which the headlight device 6 is mounted to the vehicle body.

Since the light cover 36 includes the left and right cover portions 37a, 37b, which cover left and right sides and a lower portion of the light housing 33, and the upper and lower stay portions 38, 39, which cover the light housing 33 from above and under and mount the light housing to the upper and lower brackets 27a, 27b, the headlight device 6 can be improved in outward appearance by covering a periphery of the light housing 33 with the light cover 36, to which the working for improvement in outward appearance is applied, and the headlight device 6 can be improved in mount stiffness by mounting the light housing 33 directly to the upper and lower brackets 27a, 27b.

Also, since the light cover 36 comprises separate parts, that is, the left and right cover portions 37a, 37b and the upper and lower stay portions 38, 39, rapping directions can be set to different directions, respective parts can be improved in freedom in terms of shape, and hence a desired design can be obtained in the case where the parts are made, for example, die cast moldings.

Also, since the left and right cover portions 37a, 37b and the upper and lower stay portions 38, 39, are made separate parts, upper portions of the left and right cover portions 37a, 37b, the left and right 38c, 38c of the upper stay portion 38, and the upper portions 33d of the left and right side walls 33c of the light housing 33 are clamped and fixed together, and lower portions of the left and right cover portions, the left and right side portions 39b, 39b of the lower stay portion 39, and the lower portions 33e of the left and right side walls 33c of the light housing 33 are clamped and fixed together, the joint construction is not made so complex although the light cover 36 comprises four parts.

In the case where the light housing 33 is clamped and fixed together with the cover portions and the stay portions, a construction is adopted, in which the dampers 42c, 42d comprising an elastic member are mounted to the light housing 33 and the bolts 41 c, 41 d support the dampers 42c, 42d through the collars 43a, 43b, so that the light body 35 can be elastically supported with a simple construction and so transmission of vibrations of the vehicle body to the light body 35 can be suppressed.

Also, since the speedometer unit 40 is mounted to the upper stay portion 38, it is possible to use the upper stay portion 38 as a meter mount bracket, thus enabling dispensing with any exclusive part.

Also, since the flasher stays 44a, 44a of the flasher units 44, 44 are mounted to the left and right fork bodies 26a, 26b in a manner to adjoin the upper edge of the lower bracket 27b, it is possible to provide the flasher units 44 in a surely positioned state.

Also, since fixation is effected by the plurality of bolts 41e, 41f inserted from the front when the light cover 36 is mounted directly to the upper and lower brackets 27a, 27b, it is possible to facilitate the work of mounting the light cover 36 and hence the headlight device 6 to the vehicle body.

Furthermore, the steering handle 7 is mounted to the upper bracket 27a through the hand holder 31 and a portion of the hand holder 31 is covered by the meter holding portion 38b of the upper stay portion 38 from the front, so that it is possible to achieve an improvement in outward appearance and to obtain an effect of rectifying a travel wind.

In addition, while the embodiment described above has been described with respect to the case of a motorcycle, the present teaching is also applicable to a headlight device of all straddle-type vehicles such as motor tricycles, so-called buggies for terrain traveling, etc.

## Claims

1. Straddle-type vehicle comprising:
a body frame (2);
a front fork (3) turnably supported at a front portion of the body frame (2), said front fork (3) including a left fork body (26a) and a right fork body (26b), which support a front wheel (4), and an upper bracket (27a) and a lower bracket (27b), which connect the left fork body (26a) and the right fork body (26b); and
a headlight device (6) mounted to the front fork (3), the headlight device (6) including a light body (35) and a holding member (36) that holds the light body (35), the holding member (36) mounted directly to the upper bracket (27a) and/or the lower bracket (27b), the holding member (36) including a first cover portion (37a) covering the light body (35) from one side in vehicle width direction and a second cover portion (37b) covering the light body (35) from the other side, and a first stay portion (38), by which the light body (35) is mounted to the upper bracket (27a), and a second stay portion (39), by which the light body (35) is mounted to the lower bracket (27b),
**characterized in that**
upper portions of the first cover portion (37a) and the second cover portion (37b), lateral side portions (38c) of the first stay portion (38) and upper portions of lateral side walls of the light body (35) are clamped and fixed together;
lower portions of the first cover portion (37a) and the second cover portion (37b), lateral side portions (39b) of the second stay portion (39) and lower portions of lateral side walls of the light body (35) are clamped and fixed together;
elastic members (42c), respectively, are interposed at portions of the light body (35) clamped together to the first stay portion (38) and the first cover portion (37a) and clamped together to the first stay portion (38) and the second cover portion (37b); and
further elastic members (42d), respectively, are interposed at portions of the light body (35) clamped together to the second stay portion (39) and the first cover portion (37a) and clamped together to the second stay portion (39) and the second cover portion (37b).

2. Straddle-type vehicle according to claim 1, **characterized in that** the upper bracket (27a) connects the left fork body (26a) and the right fork body (26b) above the headlight device (6), and/or the lower bracket (27b) connects the left fork body (26a) and the right fork body (26b) below the headlight device (6).

3. Straddle-type vehicle according to claim 1 or 2, **characterized in that** the first cover portion (37a), the second cover portion (37b), the first stay portion (38), and the second stay portion (39), respectively, are formed as separate parts.

4. Straddle-type vehicle according to one of claims 1 to 3, **characterized in that** the first cover portion (37a) and the second cover portion (37b) are extended so as to cover a lower portion of the light body (35).

5. Straddle-type vehicle according to claim 4, **characterized in that** extended ends (37d) of the first cover portion (37a) and the second cover portion (37b) are opposed to each other centrally in vehicle width direction.

6. Straddle-type vehicle according to one of claims 1 to 5, **characterized in that** the first cover portion (37a) and/or the second cover portion (37b) comprise a cast molding as a separate part.

7. Straddle-type vehicle according to claim 6, **characterized in that** the first cover portion (37a) and the second cover portion (37b) have different rapping directions respectively.

8. Straddle-type vehicle according to one of claims 1 to 7, **characterized in that** the first stay portion (38) and/or the second stay portion (39) comprise a cast molding as a separate part.

9. Straddle-type vehicle according to claim 8, **characterized in that** the first stay portion (38) and the second stay portion (39) have different rapping directions respectively.

10. Straddle-type vehicle according to one of claims 1 to 9, **characterized in that** a speedometer unit (40) is mounted to the first stay portion (38).

11. Straddle-type vehicle according to one of claims 1 to 10, **characterized in that** a first front direction indictor (44) is arranged on one side in vehicle width direction and a second front direction indictor (44) is arranged on the other side in vehicle width direction.

12. Straddle-type vehicle according to claim 11, **characterized in that** the first front direction indictor (44) is mounted to the left fork body (26a) and the second front direction indictor (44) is mounted to the right fork body (26b).

13. Straddle-type vehicle according to one of claims 1 to 12, **characterized in that** a plurality of bolts inserted in vehicle moving direction from the front fixes the first stay portion (38) to the upper bracket (27a) and/or fixes the second stay portion (39) to the lower bracket (27b).

14. Straddle-type vehicle according to one of claims 1 to 13, **characterized in that** a steering handle (7) is mounted to the upper bracket (27a) through a hand holder (31).

15. Straddle-type vehicle according to claim 14, **characterized in that** the holding member (36) covers at least a part of the hand holder (31).

## Patentansprüche

1. Fahrzeug vom Grätschsitz- Typ, aufweisend:
einen Karosserierahmen;
eine Vordergabel (3), drehbar an einem vorderen Abschnitt des Karosserierahmens (2) gelagert, wobei die Vordergabel (3) enthält eine linken Gabelkörper (26a) und einen rechten Gabelkörper (26b), die ein Vorderrad (4) lagern,
und einen oberen Halter (27a) und einen unteren Halter (27b), die den linken Gabelkörper (26a) und den rechten Gabelkörper (26b) verbinden; und
eine Scheinwerfervorrichtung (6), montiert an der Vordergabel (3), wobei die Scheinwerfervorrichtung (6) einen Scheinwerfergehäuse (35) und ein Halteteil (36) enthält, das den Scheinwerfergehäuse (35) hält, wobei das Halteteil (36) direkt an dem oberen Halter (27a) und / oder dem unteren Halter (27b) montiert ist, das Halteteil (36) einen ersten Abdeckabschnitt (37a) enthält, das den Scheinwerfergehäuse (35) von einer Seite in der Richtung der Fahrzeugbreite abdeckt, und einen zweiten Abschnitt (37b), der das Scheinwerfergehäuse (35) von der anderen Seite abdeckt, und einen ersten Strebenabschnitt (38), durch den der Scheinwerfergehäuse (35) an dem oberen Halter (27a) montiert ist, und einen zweiten Strebenabschnitt (39), durch den der Scheinwerfergehäuse (35) an dem unteren Halter (27b) montiert ist,
**dadurch gekennzeichnet, dass**
obere Abschnitte des ersten Abdeckabschnittes (37a) und des zweiten Abdeckabschnittes (37b), seitliche Seitenabschnitte (38c) des ersten Strebenabschnittes (38) und obere Abschnitte der seitlichen Seitenwände des Scheinwerfergehäuses (35) geklemmt und gemeinsam befestigt sind;
untere Abschnitte des ersten Abdeckabschnittes (37a) und des zweiten Abdeckabschnittes (37b), seitliche Seitenabschnitte (39b) des zweiten Strebenabschnittes (39) und untere Abschnitte der seitlichen Seitenwände des Scheinwerfergehäuses (35) geklemmt und gemeinsam befestigt sind;
elastische Teile (42c) sind jeweils eingesetzt an Abschnitten des Scheinwerfergehäuses (35), gemeinsam geklemmt an dem ersten Strebenabschnitt (38) und dem ersten Abdeckabschnitt (37a) und gemeinsam geklemmt an dem ersten Strebenabschnitt (38) und dem zweiten Abdeckabschnitt (7b); und
weitere elastische Teile (42d) sind jeweils eingesetzt an Abschnitten des Scheinwerfergehäuses (35), gemeinsam geklemmt an dem zweiten Strebenabschnitt (39) und dem ersten Abdeckabschnitt (37a) und gemeinsam geklemmt an dem zweiten Strebenabschnitt (39) und dem zweiten Abdeckabschnitt (37b).

2. Fahrzeug vom Grätschsitz- Typ nach Anspruch 1, **dadurch gekennzeichnet, dass** der obere Halter (27a) den linken Gabelkörper (26a) und den rechten Gabelkörper (26b) oberhalb der Scheinwerfervorrichtung (6) verbindet und /oder der untere Halter (27b) den linken Gabelkörper (26a) und den rechten Gabelkörper (26b) unter der Scheinwerfervorrichtung (6) verbindet.

3. Fahrzeug vom Grätschsitz- Typ nach Anspruch 1 oder 2, **dadurch gekennzeichnet, dass** der erste Abdeckabschnitt (37a), der zweite Abdeckabschnitt (37b), der erste Strebenabschnitt (38) und der zweite Strebenabschnitt (39) jeweils als separate Teile gebildet sind.

4. Fahrzeug vom Grätschsitz- Typ nach einem der Ansprüche 1 bis 3, **dadurch gekennzeichnet, dass** der erste Abdeckabschnitt (37a) und der zweite Abdeckabschnitt (37b) verlängert sind, um einen unteren Abschnitt des Scheinwerfergehäuses (35) abzudecken.

5. Fahrzeug vom Grätschsitz- Typ nach Anspruch 4, **dadurch gekennzeichnet, dass** die verlängerten Enden (37d) des ersten Abdeckabschnittes (37a) und des zweiten Abdeckabschnittes (37b) zueinander mittig in Richtung der Fahrzeugbreite gegenüberstehend sind.

6. Fahrzeug vom Grätschsitz- Typ nach einem der Ansprüche 1 bis 5, **dadurch gekennzeichnet, dass** der erste Abdeckabschnitt (37a) und der zweite Abdeckabschnitt (37b) ein Gußformteil als ein separates Teil aufweisen.

7. Fahrzeug vom Grätschsitz- Typ nach Anspruch 6, **dadurch gekennzeichnet, dass** der erste Abdeckabschnitt (37a) und der zweite Abdeckabschnitt (37b) jeweils unterschiedliche Übermaßrichtungen haben.

8. Fahrzeug vom Grätschsitz- Typ nach einem der Ansprüche 1 bis 7, **dadurch gekennzeichnet, dass** der erste Strebenabschnitt (38) und / oder der zweite Strebenabschnitt (39) ein Gußformteil als ein separates Teil aufweisen.

9. Fahrzeug vom Grätschsitz- Typ nach Anspruch 8, **dadurch gekennzeichnet, dass** der erste Strebenabschnitt (38) und der zweite Strebenabschnitt (39) jeweils unterschiedliche Übermaßrichtungen haben.

10. Fahrzeug vom Grätschsitz- Typ nach einem der Ansprüche 1 bis 9, **dadurch gekennzeichnet, dass** eine Geschwindigkeitsmeßeinheit (40) an dem ersten Strebenabschnitt (38) montiert ist.

11. Fahrzeug vom Grätschsitz- Typ nach einem der Ansprüche 1 bis 11, **dadurch gekennzeichnet, dass** ein erster vorderer Richtungsanzeiger (44) auf einer Seite in Richtung der Fahrzeugbreite und ein zweiter vorderer Richtungsanzeiger (44) auf der anderen Seite in Richtung der Fahrzeugbreite angeordnet ist.

12. Fahrzeug vom Grätschsitz- Typ nach Anspruch 11, **dadurch gekennzeichnet, dass** der vordere Richtungsanzeiger (44) an dem linken Gabelkörper (26a) und der zweite vordere Richtungsanzeiger (44) an dem rechten Gabelkörper (26b) montiert ist.

13. Fahrzeug vom Grätschsitz- Typ nach einem der Ansprüche 1 bis 12, **dadurch gekennzeichnet, dass** eine Mehrzahl von Schrauben, eingesetzt in Richtung der Fahrzeugbewegung von vorn, den ersten Strebenabschnitt (38) an dem oberen Halter (27a) und / oder den zweiten Strebenabschnitt (39) an dem unteren Halter (27b) befestigt.

14. Fahrzeug vom Grätschsitz- Typ nach einem der Ansprüche 1 bis 13, **dadurch gekennzeichnet, dass** ein Lenkhandgriff (7) an dem oberen Halter (27a) durch einen Handhalter (31) montiert ist.

15. Fahrzeug vom Grätschsitz- Typ nach Anspruch 14, **dadurch gekennzeichnet, dass** das Halteteil (36) zumindest einen Teil des Handhalters (31) abdeckt.

## Revendications

1. Véhicule du type à enfourcher, comprenant :
un cadre (2) ;
une fourche avant (3) supportée en rotation sur une partie avant du cadre (2), ladite fourche avant (3) comprenant un corps de fourche gauche (26a) et un corps de fourche droit (26b) qui supportent une roue avant (4), et un support supérieur (27a) et un support inférieur (27b) qui relient le corps de fourche gauche (26a) et le corps de fourche droit (26b) ; et
un dispositif de feu avant (6) monté sur la fourche avant (3), le dispositif de feu avant (6) comprenant un corps de lampe (35) et un élément de fixation (36) qui tient le corps de lampe (35), ledit élément de fixation (36) étant monté directement sur le support supérieur (27a) et/ou sur le support inférieur (27b), et le dispositif de feu avant (6) comprenant une première partie de recouvrement (37a) qui couvre le corps de lampe (35) à partir d'un côté dans le sens de la largeur du véhicule, et une seconde partie de recouvrement (37b) qui couvre le corps de lampe (35) à partir de l'autre côté, ainsi qu'une première partie d'appui (38) grâce à laquelle le corps de lampe (35) est monté sur le support supérieur (27a) et une seconde partie d'appui (39) grâce à laquelle le corps de lampe (35) est monté sur le support inférieur (27b),
**caractérisé en ce que** les parties supérieures de la première partie de recouvrement (37a) et de la seconde partie de recouvrement (37b), les parties latérales (38c) de la première partie d'appui (38) et les parties supérieures de parois latérales du corps de lampe (35) sont assemblées et fixées par serrage ;
les parties inférieures de la première partie de recouvrement (37a) et de la seconde partie de recouvrement (37b), les parties latérales (39b) de la seconde partie d'appui (39) et les parties inférieures de parois latérales du corps de lampe (35) sont assemblées et fixées par serrage ;
des éléments élastiques (42c), respectivement, sont intercalés au niveau de parties du corps de lampe (35) assemblées par serrage sur la première partie d'appui (38) et la première partie de recouvrement (37a) et assemblées par serrage sur la première partie d'appui (38) et la seconde partie de recouvrement (37b) ; et
d'autres éléments élastiques (42d), respectivement, sont intercalés au niveau de parties du corps de lampe (35) assemblées par serrage sur la seconde partie d'appui (39) et la première partie de recouvrement (37a) et assemblées par serrage sur la seconde partie d'appui (39) et la seconde partie de recouvrement (37b).

2. Véhicule du type à enfourcher selon la revendication 1, **caractérisé en ce que** le support supérieur (27a) relie le corps de fourche gauche (26a) et le corps de fourche droit (26b) au-dessus du dispositif de feu avant (6), et/ou le support inférieur (27b) relie le corps de fourche gauche (26a) et le corps de fourche droit (26b) au-dessous du dispositif de feu avant (6).

3. Véhicule du type à enfourcher selon la revendication 1 ou 2, **caractérisé en ce que** la première partie de recouvrement (37a), la seconde partie de recouvrement (37b), la première partie d'appui (38) et la seconde partie d'appui (39), respectivement, sont conçues comme des pièces séparées.

4. Véhicule du type à enfourcher selon l'une des revendications 1 à 3, **caractérisé en ce que** la première partie de recouvrement (37a) et la seconde partie de recouvrement (37b) sont prolongées de manière à couvrir une partie inférieure du corps de lampe (35).

5. Véhicule du type à enfourcher selon la revendication 4, **caractérisé en ce que** des extrémités prolongées (37d) de la première partie de recouvrement (37a) et de la seconde partie de recouvrement (37b) se font face de manière centrée dans le sens de la largeur du véhicule.

6. Véhicule du type à enfourcher selon l'une des revendications 1 à 5, **caractérisé en ce que** la première partie de recouvrement (37a) et/ou la seconde partie de recouvrement (37b) comprennent une partie moulée comme pièce séparée.

7. Véhicule du type à enfourcher selon la revendication 6, **caractérisé en ce que** la première partie de recouvrement (37a) et la seconde partie de recouvrement (37b) ont des sens de démoulage différents, respectivement.

8. Véhicule du type à enfourcher selon l'une des revendications 1 à 7, **caractérisé en ce que** la première partie d'appui (38) et/ou la seconde partie d'appui (39) comprennent un moulage comme pièce séparée.

9. Véhicule du type à enfourcher selon la revendication 8, **caractérisé en ce que** la première partie d'appui (38) et la seconde partie d'appui (39) ont des sens de démoulage différents, respectivement.

10. Véhicule du type à enfourcher selon l'une des revendications 1 à 9, **caractérisé en ce qu'**une unité de tachymètre (40) est montée sur la première partie d'appui (38).

11. Véhicule du type à enfourcher selon l'une des revendications 1 à 10, **caractérisé en ce qu'**un premier indicateur de direction avant (44) est disposé sur un côté, dans le sens de la largeur du véhicule, et un second indicateur de direction avant (44) est disposé sur l'autre côté, dans le sens de la largeur du véhicule.

12. Véhicule du type à enfourcher selon la revendication 11, **caractérisé en ce que** le premier indicateur de direction avant (44) est monté sur le corps de fourche gauche (26a), et le second indicateur de direction avant (44) est monté sur le corps de fourche droit (26b).

13. Véhicule du type à enfourcher selon l'une des revendications 1 à 12, **caractérisé en ce que** plusieurs chevilles insérées à partir de l'avant, dans le sens de déplacement du véhicule, fixent la première partie d'appui (38) au support supérieur (27a) et/ou fixent la seconde partie d'appui (39) au support inférieur (27b).

14. Véhicule du type à enfourcher selon l'une des revendications 1 à 13, **caractérisé en ce qu'**un guidon (7) est monté sur le support supérieur (27a) grâce à un support de guidon (31).

15. Véhicule du type à enfourcher selon la revendication 14, **caractérisé en ce que** l'élément de fixation (36) couvre une partie au moins du support de guidon (31).
